Europäisches Patentamt

European Patent Office

Office européen des brevets

(11) Publication number: **0 609 499 A1**

## EUROPEAN PATENT APPLICATION

(21) Application number: 93117829.7

(22) Date of filing: 03.11.93

(51) Int. Cl.5: **C08K 13/02**, C08L 21/00,
//(C08K13/02,3:04,3:04,3:36,
5:54)

(30) Priority: 06.11.92 US 972623
03.05.93 US 56821
02.09.93 US 116125

(43) Date of publication of application:
**10.08.94 Bulletin 94/32**

(84) Designated Contracting States:
**DE FR GB**

(71) Applicant: **HYDRIL COMPANY**
**714 West Olympic Boulevard**
**Los Angeles California 90015 (US)**

(72) Inventor: **Carlson, Douglas W.**
**5303 Manor Glen**
**Kingwood, Texas 77345 (US)**
Inventor: **Breach, William D.**
**17550 Highway 59,**
**Apt. 1107**
**Humble, Texas 77396 (US)**

(74) Representative: **Baillie, Iain Cameron et al**
**c/o Ladas & Parry**
**Altheimer Eck 2**
**D-80331 München (DE)**

(54) Carbon black pair with different particle size and improved rubber stock.

(57) An improved rubber stock with a unique carbon black system including mismatched and matched pairs of furnace blacks with fumed silica and a silane coupler has been developed. The carbon black system includes a mixture of large and small particles with high and low structure carbon black pairs. The carbon black system compounded with polar and nonpolar rubber provides products with a range of desirable characteristics using only two carbon blacks.

Carbon black is a form of elemental carbon and it can be produced in varying particle sizes and structures. Structure is the degree of particle coalescence and agglomeration with a high structure carbon black having more particles agglomerated into random structures than does a low structure carbon black. Particle size and structure affect various qualities in rubber such as elongation, modulus, tear strength, tensile strength and resilience. Carbon blacks are used with both polar and nonpolar rubbers to enhance these qualities. Rubber stocks containing larger particle blacks display good resilience, but tend to be deficient in tensile strength and elongation. Conversely, rubber stocks containing small particle blacks display good tensile strength and elongation, but have poor resilience qualities. High structure carbon blacks improve the modulus and extrudability of rubber stock. The low structure blacks improve the resilience characteristics of rubber stocks. The carbon blacks in the middle ranges provide stocks that have average characteristics. Manufacturing techniques for carbon blacks have been perfected so that large or small particle carbon blacks with either high or low structure can be prepared.

Carbon blacks are graded by ASTM designation D 1765 standard classification. There are at least four types of carbon blacks, including furnace blacks, lamp blacks, thermal blacks and channel blacks. Furnace blacks are not modified to alter their inherent properties on rubber cure rates. Lamp blacks or lamp black substitutes have modified surfaces that affect the cure rates of rubber. Thermal blacks include very large particle blacks. These blacks are manufactured by incomplete combustion of natural gas. Channel blacks are also produced by incomplete combustion of natural gas. The carbon particles which are intermediate in size, are deposited on steel channels over the flame. The surface of the particle is not altered to affect rubber cure rate. The structure of blacks is defined by the n-Dibutyl Phthalate Absorption number (DBP number) and is measured by the D 2414 test method. The larger the DBP number the higher the structure. Particle size is defined by Iodine Absorption Number and is measured by ASTM D 1510 test method. There is an inverse relationship between the iodine number and particle size; the higher the number the the smaller the particle.

In manufacturing rubber products a carbon black with certain structure and particle size is used to enhance a certain desired characteristic while sacrificing others. For instance, a large particle black will be used to achieve desired compression characteristics at the expense of tear and modulus. Combinations of carbon blacks with the same size, but different structures have been used together. Using carbon black with the same size characteristics limits flexibility in varying qualities in the rubber products. However, utilizing carbon blacks with different sizes has generally been avoided because the mixture of different sizes of carbon blacks are deemed incompatible.

A rubber products manufacturer selects a carbon black from those with different sizes and structure to make a product with varying characteristics. Even so, utilizing one type of carbon black or pairs matched for size, limits the qualities achieved in the rubber, because the enhancement of certain qualities is detrimental to others. Recommended formulations for transmission belting for engines, hydraulic hose tubes and wire and cable jackets include mixtures of large particle carbon blacks to provide desired compression characteristics. The Vanderbilt Rubber Handbook, R.T. Vanderbilt Co., Inc.; Norwalt, CT; 13th Ed. (1990) pp. 653,721. Other formulations for high hardness rubber mix furnace blacks with large particle thermal blacks. Id. at 770. Typical formulations for seals include a matched pair of large particle carbon blacks with high and low structure. Id. at 737. Mixtures of carbon blacks with similar size and structure are used in some applications. For example, two large particle and low structure carbon blacks have been recommended for a tire body formulation. Id. at 606. Tire treads, on the other hand, contain small particle carbon blacks. Id. at 604, 605. The large particle and low structure is desired for resilience qualities in the tire body. The tread utilizes small particles with better tensile strength.

The present invention is a unique pairing of furnace carbon blacks with disparate qualities to provide a system that can be manipulated to produce rubber with balanced optimum qualities. Specifically, the carbon black system is a mixture of a pair of furnace carbon blacks.

In one embodiment of the present invention the pairs are mismatched according to size and structure. One of the carbon blacks has a DBP number of less than 110 and the other has a DBP number of greater than 110 to provide a mix of structures. The pairs are also mismatched according to size with one of the pair with an iodine absorption of greater than 110 and the other with less than 110.

In a second embodiment of the invention the pairs are matched according to structure, but have different particle size. Typically, carbon black pairs are matched by size and the present invention is contrary to traditional teaching. One of the pair of carbon blacks has an Iodine Absorption Number of greater than 115 and the other has an Iodine Absorption Number of less than 115. The carbon black pairs have the same structure. For the invention, structure is defined as high structure for particles with a DBP number of greater than 110 and low structure for particles with a DBP number of less than 110. Therefore, both carbon blacks in the pair will have either high or low structure based on the 110 DBP number cutoff.

The two carbon blacks are used together with the ratio of one to another generally not to exceed 3:1. The ratio is varied according to the qualities desired. The use of the carbon black pairs as described in the system of this invention hereinabove and mixed with rubber stock has produced an improved rubber product with good compression and resilience characteristics generally attributed to the use of large carbon black particles in a rubber while retaining the good elongation, modulus, tear and tensile strength attributable to the presence of small carbon black particles. The use of the unique carbon black pairs can produce a rubber composition with a combination of the optimum qualities of the large and small particles. The combination of resilience as well as good elongation, modulus, tear and tensile strength has been attained.

The carbon black pair systems also include, in combination with the mismatched and matched carbon black pairs, a fumed silica and silane coupler. Fumed silica has a much smaller particle size than precipitated silica that is also used in rubber processing. Silica increases tear strength. Fumed silica is very expensive and builds viscosity in the rubber. Silane couplers used in conjunction with silica decrease elongation, but sometimes can produce excessively high modulus elongation. Silane couplers are used in ranges known to those skilled in the art with the fumed silica. A typical ratio is 10:1 fumed silica to silane coupler. The fumed silica is used generally in a 12.5% to 50% by weight to the combined weight of the carbon black pair.

The carbon blacks can be selected according to the parameters of this invention to maximize the desired properties of polar and nonpolar rubbers. The use of the unique carbon black pairs with silica/silane system allows the manufacturer to maintain a minimal stock of carbon blacks and produce rubber products with a range of qualities. The unique carbon black pairs eliminate the need to maintain a wide range of different size and structure carbon blacks for manufacturing purposes. A further advantage afforded by the present invention resides in the fact that different types of cures for the rubber can be used with the carbon black system of this invention including sulfur and sulfur donor cures depending on the rubber stock.

The use of the mismatched and matched carbon black pairs with a fumed silica and silane coupler produces unique rubber compositions. The carbon black system is mixed with the selected rubber stock and cured. The carbon black mixture comprises from about 40 parts per hundred to about 80 parts per hundred of the selected rubber. The rubber compositions, both polar and nonpolar rubber, have as the carbon black constituent not only both high and low structure carbon blacks with DBP numbers greater than and less than 110 respectively, but also larger and smaller particle carbon blacks with Iodine Absorption Numbers of less than and greater than 110 respectively in one embodiment and less than and greater than 115 in another. The use of the new carbon black system produces a new rubber composition as described herein.

Carbon blacks are given an ASTM designation with the Letter "N" used to indicate typical furnace blacks that receive no special surface modification to alter their influence on the rate of cure. The second character in the nomenclature is a digit to designate particle size with lower digits indicating smaller particles. The third and fourth characters are assigned arbitrarily, however the full designation of each of the carbon blacks assigned by the ASTM describes the carbon black as to particle size and the structure. For example, in one embodiment the mismatched pairs is ASTM D1765 designations N231 a small particle (121 Iodine Absorption No.) and low structure (DBP No. 92) and N550 a large particle (43 Iodine Absorption No.) and high structure (DBP No. 121). By varying the amount of N231 and N550 within the range of 3 parts N231 to 1 part N550 or 1 part N231 to 3 parts N550, rubber stocks can be provided with varying characteristics in acceptable ranges for different rubber products. In another embodiment for example, one of the pairs with different particle sizes and low structure is ASTM D1765 designations N231 a small particle (121 Iodine Absorption No.) and low structure DBP No. 92) and N774 a large particle (29 Iodine Absorption No.) and low structure (DBP No. 72). By varying the amount of N231 and N774 within the range of 3 parts N231 to 1 part N774 or 1 part N231 to 3 parts N774, rubber stocks can be provided with varying characteristics in acceptable ranges for different rubber products. Another pair with different particle size and high structure is N234 a small particle (120 Iodine Absorption No.) and high structure (DBP No. 125) and N550 a large particle (43 Iodine Absorption No.) and high structure (DBP No. 121). Accordingly, the rubber products manufacturer can stock a limited number of carbon blacks and produce a variety of rubber stocks.

The carbon black system of one embodiment is a mixture of a pair of furnace carbon blacks with one pair having a low structure with a DBP No. of less than 110 and the other with a high structure with a DBP No. of greater than 110. The pair is also mismatched as to size with a large particle carbon black with an Iodine Absorption No. of less than 110 and the other with an Iodine Absorption No. of greater than 110.

In a second embodiment the carbon black pair is a mixture of two furnace carbon blacks with the same structure having DBP Nos. of greater than or less than 110. The pair is mismatched as to size. One of the pairs is a large particle carbon black with an Iodine Absorption No. of less than 115 and the other of the pair is a small particle carbon black with an Iodine Absorption No. of greater than 115. Excluded from the carbon black system and pairs of this invention are the extremely large thermal blacks such as N990 that have an Iodine Absorption No. of 10 or less. The carbon black system also includes fumed silica and a silane coupler.

The carbon black system is used with polar and nonpolar rubber. The nonpolar rubbers include natural rubber and styrene-butadiene rubber (SBR). Polar rubber such as nitrile rubber (NBR) is used. Different rubber stocks benefit from the carbon black system of the invention because the use of two mismatched pairs of carbon black can be varied to provide different desired characteristics to the rubber.

The fumed silica used with the carbon black pairs is commercially available and known to those skilled in the art. An example is a fumed colloidal silica made by Cabot Corporation, Boston, Massachusetts and sold under the trademark Cab-O-Sil®. The fumed silica is used with an effective amount of silane coupler. Components of the carbon black system of this invention and other additives are measured by parts per hundred weight of the rubber polymer used (sometimes referred to as "phr"). The fumed silica is used in about 10 to about 20 parts per hundred of the selected rubber polymer. In the preferred embodiments the silane coupler used is bis,3, (triethoxysilyl)-proply-tetrasulfide used with the fumed silica in a 10:1 ratio silica to silane coupler, however other silanes generally known in the art are also effective.

The carbon blacks are mixed with neither of the pair exceeding the other in a 3:1 ratio with the preferred ratio of 2:1. The carbon blacks can be varied within the ratio to achieve the desired characteristics of the end rubber product. The carbon blacks are used in about 40 to about 80 parts per hundred per weight of rubber stock.

Additives known to those skilled in the art can be used with the carbon black system of this invention including antioxidants, antiozonants, processing oils and plasticizers. Also, cure systems known to those skilled in the art for the rubber stock selected are used in this invention.

Nitrile rubber is used for many industrial applications. The following Table 1 is a summary of characteristics for nitrile rubber stock with two mismatched carbon pairs that are exemplary of the invention. One of the pairs of the furnace carbon blacks is N231, which is a small particle black (Iodine No. 121) with low structure (DBP No. 92) and the other is N550, which is a large particle black (Iodine No. 43) with high structure (DBP No. 121). The other mismatched pair is a N234 which is a small particle black (Iodine No. 120) with high structure (DBP No. 125) and N774 which is a large particle black (Iodine No. 29) with low structure (DBP No. 72).

Table 1 summarizes data for modulus, set, tensile strength, elongation and tear strength for the mismatched carbon black pairs used with the fumed silica and silane coupler. The fumed silica was used in 15 parts per hundred weight of the selected rubber stock and the coupler was used in 1.5 parts per hundred weight. Nitrile rubber stock was prepared with the mismatched pairs in varying ratios with the amount of each pair from 20 to 30 to 40 parts per hundred. Table 1 summarizes the properties of the nitrile rubber with the various mismatched pairs in different combinations to illustrate the range of values for the carbon black system of the invention.

A comparison of the mismatched pairs to two sets of matched pairs as well as comparisons to individual carbon blacks used alone ware shown in Table 1. The matched pairs of carbon black are similar in size but different in structure. For instance, N550 is a large particle black (Iodine No. 43) with high structure (DBP No. 121) and N774 is a large particle black (Iodine No. 29) with low structure (DBP No. 72). Another matched pair is N231 which is a small particle black (Iodine No. 121) with low structure (DBP No. 92) and N234 which is a small particle black (Iodine No. 120) with high structure (DBP No. 125). The matched carbon black pairs were used with fumed silica or silane coupler. The matched carbon black pairs were prepared in varying ratios from 20 to 30 to 40 parts per hundred similar to the mismatched pairs. Individual carbon blacks were also used at 60 parts per hundred of nitrile rubber with the fumed silica and silane coupler of the carbon black system of the present invention.

In the examples shown in Table 1 the rubber stocks were cured for thirty minutes with an elemental sulfur cure that produces polysulfidic cross links.

TABLE 1

| NITRILE RUBBER SUMMARY | | | | | | | | |
|---|---|---|---|---|---|---|---|---|
| Column No. | 1 | 2 | 3 | 4 | 5 | 6 | 7 | 8 |
| Property | N231[1] N550 | N234[2] N774 | N550[3] N774 | N231[4] N234 | N231 60 PHR | N234 60 PHR | N550 60 PHR | N774 60 PHR |
| Modulus $M_{300}$ ASTM D412-75 psi | 1170-2645 | 1360-2840 | 1310-2710 | 1305-2925 | 1790 | 2180 | 2220 | 1630 |
| Set ASTM D412-75 Percent | 3.7-9.0 | 5.6-9.6 | 3.1-6.0 | 5.9-12.8 | 8.2 | 9.6 | 5.4 | 4.0 |
| Tensile Strength ASTM D412-75 psi | 3260-3905 | 3425-3985 | 3175-3545 | 3555-4420 | 3890 | 3805 | 3245 | 3145 |
| Elongation ASTM D412-75 Percent | 420-695 | 495-690 | 430-670 | 390-640 | 595 | 505 | 560 | 630 |
| Tear Strength Die C ASTM D624-73 pounds/inch | 250-285 | 275-315 | 225-230 | 250-270 | 275 | 255 | 245 | 245 |

[1]Mismatched Pair N231 - small particle and low structure; N550 - large particle and high structure.
[2]Mismatched Pair N234 - small particle and high structure; N774 - large particle and low structure.
[3]Matched Pair N550 large particle and high structure; N774 - large particle and low structure.
[4]Matched Pair N231 - small particle and low structure; N234 small particle and high structure.

Columns 1 and 2 of Table 1 present a summary of extreme data for the mismatched pairs N231/N550 and N234/N774. The columns 3 and 4 of Table 1 present data for the pairs N550/N774 and N231/N234 matched according to particle size. The range of carbon black loading in columns 1 through 4 is 40 to 80 phr with 60 phr as the center point. The ratio of the carbon blacks was determined according to a 2 squared factorial design. Tables 2 and 3 contain complete data for nitrile rubber with the varied carbon black loading for the mismatched pairs N231/N550 and N234/N774. Columns 5 through 8 of Table 1 present data for each of the individual carbon blacks used in pairs shown in columns 1 through 4 of Table 1. The loading in columns 5 through 8 is 60 phr, the center point, and is at or near the loading required for maximum tensile strength.

As shown in Table 1, the range of properties for the mismatched pairs in columns 1 and 2 essentially brackets all data in columns 3 through 8, for matched pairs and individual carbon blacks. By comparing tensile strengths, it is obvious that large particle size carbon blacks represented by columns 3, 7 and 8 produce lower tensile strength than do small particle size carbon blacks represented by columns 4, 5 and 6. Comparing columns 1 and 2 to these groups proves that mismatched pairs maintain higher tensile strengths. Traditional teaching is that the carbon black producing the lower tensile strength predominates in a mixture. The data in columns 1 and 2 are contrary to this teaching and demonstrate the unique features of this invention.

As shown in Table 1, the use of the carbon black system of this invention can be used to produce rubber stock with desirable characteristics without loading the stock with excessive amounts of carbon black. The amount of each carbon black of the mismatched pairs can be varied to achieve the desired properties for the chosen application. The set values with an optimum of seven percent can be reached while at the same time attaining a modulus value ($M_{300}$) of 2200 psi without loading high amounts of carbon black. Also, elongation can decrease with carbon black loading and the use of the carbon black system of the present invention provides elongation while maintaining the set values. The use of matched carbon black pairs tends to restrict the set values. With the large particle carbon blacks, the set is lower than the desired seven percent. With the small particle carbon blacks the set is higher and can exceed desired values.

The properties for the nitrile rubber with varied ratios by weight of the mismatched pairs of carbon black from Table 1 are shown below in Tables 2 and 3 to illustrate the flexibility of using only two carbon blacks to produce various types of rubber products.

TABLE 2

| MISMATCHED PAIRS - NITRILE RUBBER<br>N231  Small Particle Low Structure<br>N550  Large Particle High Structure | | | | | |
|---|---|---|---|---|---|
| Property | N231/N550 parts per hundred  (PHR) | | | | |
| | Col. 1 | Col. 2 | Col. 3 | Col. 4 | Col. 5 |
| | 20/20 | 40/20 | 20/40 | 40/40 | 30/30 |
| Modulus $M_{300}$ ASTM D412-75 psi | 1170 | 1855 | 2030 | 2635 | 1940 |
| Set ASTM D412-75 Percent | 3.7 | 6.9 | 5.5 | 9.0 | 5.8 |
| Tensile Strength ASTM D412-75 psi | 3905 | 3480 | 3375 | 3260 | 3455 |
| Elongation ASTM D412-75 Percent | 695 | 570 | 545 | 420 | 565 |
| Tear Strength Die C ASTM D624-73 pounds/inch | 250 | 285 | 250 | 265 | 265 |

Table 2 presents the detailed measurements for each loading level of the mismatched carbon black pair N231/N550 in nitrile rubber. The unique feature of Table 2 is the consistency of data for blends of N231 and N550 ranging from 40/20 to 20/40 as shown in columns 2,3,5.

The measured modulus, $M_{300}$ for each of the blends is 1855, 2030 and 1940 with a measuring error of about ± 100 psi. Traditional teaching in the art suggests that high modulus is developed by the use of high structure black i.e. N550, however these results are contrary to that teaching. Conversely, teaching in the art holds that high structure blacks produce high set (lower resilience) again the mismatched pairs demonstrate an unusual effect.

6

## TABLE 3

| MISMATCHED PAIRS – NITRILE RUBBER<br>N234   Small Particle High Structure<br>N774   Large Particle Low Structure | | | | | |
|---|---|---|---|---|---|
| | N234/N774 parts per hundred | | | | |
| Property | Col. 1 | Col. 2 | Col. 3 | Col. 4 | Col. 5 |
| | 20/20 | 40/20 | 20/40 | 40/40 | 30/30 |
| Modulus<br>$M_{300}$<br>ASTM D412-75<br>psi | 1360 | 2170 | 2080 | 2840 | 1980 |
| Set<br>ASTM D412-75<br>Percent | 5.6 | 7.7 | 6.0 | 9.6 | 6.3 |
| Tensile strength<br>ASTM D412-75 psi | 3985 | 3740 | 3545 | 3425 | 3615 |
| Elongation<br>ASTM D412-75<br>Percent | 690 | 610 | 615 | 495 | 595 |
| Tear Strength<br>Die C ASTM D624-73<br>pounds/inch | 265 | 315 | 280 | 305 | 275 |

The pair of carbon blacks in Table 3 above are mismatched, but as opposed to N231/N550 the pair N234/N774 reverses the structure relationship, *i.e.* the small particle carbon black N234, is the high structure carbon black. Table 1 shows that at 60 phr loading, N234 yields a tensile strength of 3805 psi, while N774 yields 3145 psi. These results would be expected by a rubber chemist of ordinary skill in the art. Examination of columns 2, 3 and 5 (all at 60 phr loading) shows that tensile strength for the blends is within the range 3650 ± 100 psi. This result is unexpected. Table 1 also shows that N234 yields a set of 9.6 percent while N774 yields a set of 4.0 percent. These are commonly expected results. Columns 2, 3 and 5 present data lying within the range 6.7 ± 1.0 percent demonstrating that the invention provides for high tensile strength coupled with low set and high resilience.

A carbon black system of this invention can be used with nitrile rubber with a sulfur donor cure rather than the elemental sulfur cure of the nitrile rubber examples shown in Tables 1, 2 and 3. The mismatched pair used was N110 small particle (Iodine No. 145) with high structure (DBP No. 113) and N660 large particle (Iodine No. 36) and low structure (DBP No. 90). Table 4 shows the properties of nitrile with a sulfur donor cure of 1.27 phr MORFAX, 4-Morpholinyl-2-benzothiazole; 1.27 phr VANAX-A, 4,4'-dithiodimorpholine and 1.00 phr Ethyl Tuads, tetraethylthuiran dissulfide that are products manufactured by R. T. Vanderbilt.

The coupler was used in 1.4 phr and the fumed silica was used in 20 phr.

TABLE 4

| MISMATCHED PAIRS - NITRILE RUBBER<br>N110 Small Particle High Structure<br>N660 Large Particle Low Structure | | | | | | |
|---|---|---|---|---|---|---|
| | N110/N660 parts per hundred | | | | | |
| Property | Col. 1 | Col. 2 | Col. 3 | Col. 4 | Col. 5 | Col. 6 |
| | 20/20 | 30/20 | 20/30 | 30/30 | 25/25 | 44.5/0 |
| Modulus $M_{300}$ ASTM D412-75 psi | 1530 | 2050 | 1990 | 2515 | 1910 | 1555 |
| Set ASTM D412-75 Percent | 4.1 | 5.3 | 4.7 | 6.0 | 5.0 | 5.6 |
| Tensile strength ASTM D412-75 psi | 4115 | 3955 | 3880 | 3820 | 3690 | 4100 |
| Elongation ASTM D412-75 Percent | 605 | 535 | 565 | 500 | 530 | 600 |
| Tear Strength Die C ASTM D624-73 pounds/inch | 250 | 270 | 245 | 250 | 240 | 280 |
| Mooney Viscosity ASTM D1648 | 92 | 116 | 103 | 136 | 103 | 126 |
| Scorchtime $t_5$ | 5.4 | 4.5 | 5.1 | 4.1 | 4.9 | 3.9 |
| Durometer hardness ASTM 2240 | 81 | 85 | 83 | 88 | 85 | 82 |

Table 4 is a comparison of various loadings of N110 and N660 in columns 1 through 5 and 44.5 phr of N110 only shown in column 6. Generally, the higher the loading of carbon black the higher viscosity of the rubber. However, the viscosities for the rubbers in columns 2, 3 and 5 of Table 4 have lower viscosity even though the loading is 50 phr as compared to 44.5 phr loading of N110 shown in column 6. The amounts of the mismatched pairs in Table 4 can be varied to produce rubber with varying desired properties. The rubber compounds in columns 2, 3 and 5 of Table 4 have higher modulus than the single carbon black in column 6 while maintaining comparable permanent set.

The cure used in the rubber compounds of Table 4 is a sulfur donor cure. The cure system yields only mono or desulfide linkages which are more heat stable than polysulfidic cross links produced by elemental sulfur cures. Table 4 also includes the scorch time, viscosity and durometer properties. The viscosity of the compounds provides a moldable rubber with sufficient modulus for industrial applications. One such application is the rubber for an annular blow-out preventer used on oil rigs.

The carbon black system of this invention can also be used with nonpolar rubbers such as natural rubber and styrene-butadiene rubber (SBR). The nonpolar rubbers utilize a sulfur cure system as typically applied by those skilled in the art. The rubber stock is cured for 30 minutes. Table 5 contains the properties of a natural rubber stock with mismatched pairs of carbon blacks in various ratios by weight.

### TABLE 5

| MISMATCHED PAIRS - NATURAL RUBBER<br>N231 Small Particle Low Structure<br>N550 Large Particle High Structure | | | | | |
|---|---|---|---|---|---|
| **Property** | N231/N550 parts per hundred | | | | |
| | Col. 1 | Col. 2 | Col. 3 | Col. 4 | Col. 5 |
| | 12.5/12.5 | 25/12.5 | 12.5/25 | 25/25 | 18.7/18.7 |
| Modulus $M_{300}$ ASTM D412-75 psi | 950 | 1375 | 1400 | 1960 | 1375 |
| Set ASTM D412-75 Percent | 2.5 | 5.0 | 3.6 | 5.5 | 3.7 |
| Tensile strength ASTM D412-75 psi | 4010 | 3800 | 3740 | 3545 | 3825 |
| Elongation ASTM D412-75 Percent | 660 | 610 | 600 | 525 | 610 |
| Tear Strength Die C ASTM D624-73 pounds/inch | 525 | 540 | 535 | 670 | 685 |

The data presented in Tables 1, 2, 3 and 4 are based on tests on nitrile rubber stocks. Nitrile rubber is a highly polar rubber noted for its outstanding oil resistance, but it displays poor dynamic resilience. Table 5 presents data for natural rubber, a nonpolar rubber noted for outstanding dynamic resilience, but which displays poor oil resistance.

The pair of carbon blacks shown in Table 5 is N231/N550, a mismatched pair. As opposed to nitrile rubber, the tensile maximum for natural rubber occurs at about 40 phr loading, hence the loading levels for these experiments are in the range of 25-50 phr. Examining columns 2, 3 and 5 in Table 5 for modulus ($M_{300}$) shows the remarkable result that at 37.5 loading the moduli of 1375 and 1400 are essentially identical. Columns 2 and 3 present the unexpected result that at 37.5 phr loading the system responds identically no matter which carbon black predominates. This is important because it allows the use of larger amounts of N550, a lower cost carbon black compared with N231. These data demonstrate the utility of the invention.

Another example of a nonpolar rubber used with the carbon black system is SBR. Table 6 contains the properties of SBR stock with a mismatched carbon black pair.

TABLE 6

| MISMATCHED PAIRS - SBR<br>N231  Small Particle Low Structure<br>N550  Large Particle High Structure | | | | | |
|---|---|---|---|---|---|
| Property | N231/N550 parts per hundred | | | | |
| | Col. 1 | Col. 2 | Col. 3 | Col. 4 | Col. 5 |
| | 20/20 | 40/20 | 40/20 | 40/40 | 30/30 |
| Modulus $M_{300}$ ASTM D412-75 psi | 775 | 1250 | 1315 | 1810 | 1305 |
| Set ASTM D412-75 Percent | 5.1 | 7.8 | 7.1 | 12.1 | 7.2 |
| Tensile strength ASTM D412-75 psi | 2785 | 2650 | 2610 | 2395 | 2660 |
| Elongation ASTM D412-75 Percent | 760 | 645 | 610 | 440 | 630 |
| Tear Strength Die C ASTM D624-73 pounds/inch | 300 | 315 | 310 | 255 | 295 |

SBR is a commercially important nonpolar synthetic rubber often used as a substitute for natural rubber. Unlike natural rubber, it is not self-reinforcing and requires higher levels of carbon black loading to attain its maximum mechanical properties. The carbon black loading for the tensile maximum is about 60 phr, and the loadings used in this experiment vary from 40 to 80 phr. The pair of mismatched carbon blacks used in Table 6 is N231 and N550.

TABLE 7

| NITRILE RUBBER SUMMARY | | | | | | | | |
|---|---|---|---|---|---|---|---|---|
| Column No. | 1 | 2 | 3 | 4 | 5 | 6 | 7 | 8 |
| Property | N231[1] N774 | N234[2] N550 | N550[3] N774 | N231[4] N234 | N231 60 PHR | N234 60 PHR | N550 60 PHR | N774 60 PHR |
| Modulus $M_{300}$ ASTM D412-75 psi | 1125-2430 | 1340-2930 | 1310-2710 | 1305-2925 | 1790 | 2180 | 2220 | 1630 |
| Set ASTM D412-75 Percent | 5.1-8.9 | 3.4-9.0 | 3.1-6.0 | 5.9-12.8 | 8.2 | 9.6 | 5.4 | 4.0 |
| Tensile Strength ASTM D412-75 psi | 3150-3820 | 3430-3960 | 3175-3545 | 3555-4420 | 3890 | 3805 | 3245 | 3145 |
| Elongation ASTM D412-75 Percent | 340-605 | 375-650 | 430-670 | 390-640 | 595 | 505 | 560 | 630 |
| Tear Strength Die C ASTM D624-73 pounds/inch | 300-325 | 230-260 | 225-230 | 250-270 | 275 | 255 | 245 | 245 |

[1]Carbon Black Pair N231 - small particle and low structure; N774 - large particle and low structure.
[2]Carbon Black Pair N234 - small particle and high structure; N550 - large particle and high structure.
[3]Matched Pair N550 large particle and high structure; N774 - large particle and low structure.
[4] Matched Pair N231 - small particle and low structure; N234 small particle and high structure.

Columns 1 and 2 of Table 7 present extreme data for the carbon black pairs N231/N774 and N234/N550. The columns 3 and 4 of Table 7 present data for the pairs N550/N774 and N231/N234 matched according to particle size. The range of carbon black loading in Table 7 columns 1-4 is 40 to 80 phr with 60 as the center point. Tables 8 and 9 contain complete data for nitrile rubber with the varied carbon black loading for the carbon black pairs N231/N774 and N234/N550. Columns 5-8 in Table 7 present data for each of the carbon blacks when used separately in nitrile rubber. The loading in columns 5-8 is 60 phr, the center point, and is at or near the loading required for maximum tensile strength.

As shown in Table 7 the range of properties for the pairs in columns 1 and 2 of the invention are similar to the ranges presented in columns 3-8, for matched pairs and individual carbon blacks. By comparing tensile strengths, it is obvious that large particle size carbon blacks represented by columns 3,7 and 8 produce lower tensile strength than do small particle size carbon blacks represented by columns 4, 5 and 6. Comparing columns 1 and 2 to these groups proves that carbon black pairs maintain higher tensile strengths. Traditional teaching is that the carbon black producing the lower tensile strength predominates in a mixture. The data in columns 1 and 2 are contrary to this teaching and demonstrate the unique features of this invention.

As shown in Table 7 the use of the carbon black system of this invention can be used to produce rubber stock with desirable characteristics without loading the stock with excessive amounts of carbon black. The amount of the carbon black pairs can be varied to achieve the desired properties for the chosen application. The set values with an optimum of seven percent can be reached while at the same time attaining a modulus value ($M_{300}$) of 2200 psi without loading high amounts of carbon black. Also, elongation can decrease with carbon black loading and the use of the carbon black system of the present invention provides elongation while maintaining the set values. The use of matched carbon black pairs tends to restrict the set values within a certain range with the large particle matched pair having a lower range of set values and the small particle matched pair having a higher range of set values. With the large particle carbon blacks, the set is lower than the desired seven percent. With the small particle carbon blacks the set is higher and can exceed desired values.

The properties for the nitrile rubber with varied ratios by weight of the pairs of carbon black with different particle sizes is shown below in Tables 8 and 9 to illustrate the flexibility of using only two carbon blacks to produce various types of rubber products.

TABLE 8

| CARBON BLACK PAIRS - NITRILE RUBBER<br>N231  Small Particle Low Structure<br>N774  Large Particle Low Structure | | | | | |
|---|---|---|---|---|---|
| Property | N231/N774 parts per hundred  (PHR) | | | | |
| | Col. 1 | Col. 2 | Col. 3 | Col. 4 | Col. 5 |
| | 20/20 | 40/20 | 20/40 | 40/40 | 30/30 |
| Modulus M300 ASTM D412-75 psi | 1125 | 1775 | 1770 | 2430 | 1785 |
| Set ASTM D412-75 Percent | 5.1 | 8.4 | 6.0 | 8.9 | 6.7 |
| Tensile Strength ASTM D412-75 psi | 3660 | 3820 | 3615 | 3100 | 3690 |
| Elongation ASTM D412-75 Percent | 605 | 530 | 560 | 340 | 565 |
| Tear Strength Die C ASTM D624-73 pounds/inch | 300 | 315 | 325 | 330 | 325 |

Table 8 presents the detailed measurements for each loading level of the carbon black pair N231/N774 in nitrile rubber. The unique feature of Table 8 is the consistency of data for blends of N231 and N774 ranging from 40/20 to 20/40 as shown in columns 2, 3, and 5. Furthermore, within the ratios of carbon black pairs in cols. 2, 3 and 5 for N231:N774, the properties are uniform, especially tensile modulus, 1775, 1770, and 1785 psi respectively. N774 at 60 phr yields a tensile modulus of 1630 psi, and N231 at 60 phr yields a tensile modulus of 1790 psi. Ordinarily, one would expect the tensile modulus of a blend to be near an average for that of the individual carbon blacks, or at least proportionate. That the modulus should most closely approximate that yielded by the finer particle black is also unexpected.

Another unexpected result is in the permanent set. While N774 yields a desirable permanent set, the tensile is unacceptably low. N231 yields a desirable tensile, but the permanent set is unacceptably high. The blend shown in column 3, 20 phr N231 and 40 phr N774, yields an acceptable tensile and set. One would not anticipate the blend to yield both properties at acceptable levels, since the blend yielding even one optimal property is fortuitous. The remaining physical properties shown are well within normal and desirable ranges.

Referring to Table 7 it is observed that N774 yields tensile strength of 3145 psi, while N231 yields 3890 psi. Again, N774 yields a permanent set of 4.0%, while N231 yields 8.2%. All of these observations are typical, that is the small particle black, N231, yields high tensile and high permanent set, while the large particle black, N774, yields lower tensile strength and permanent set. In these examples N231 and N774 are used at 60 phr respectively, an amount near what is required for maximum tensile strength.

Referring to Table 8 columns 2, 3 and 5 combinations of N774 and N231 which total 60 phr, show an interesting and unpredictable result. The tensile strengths of the 3 compounds are 3820, 3615 and 3690, results which are, within acceptable experimental error, the same. This tensile strength is also significantly higher than that for N774, (3145 psi) while being much closer to that for N231 (3890 psi). In general, tensile strength should follow the pattern of the largest sized particle since the failure should occur at a site occupied by a large particle before failing at a site occupied by a small particle.

## TABLE 9

| CARBON BLACK PAIRS – NITRILE RUBBER<br>N234  Small Particle High Structure<br>N550  Large Particle High Structure | | | | | |
|---|---|---|---|---|---|
| Property | N234/N550 parts per hundred | | | | |
| | Col. 1 | Col. 2 | Col. 3 | Col. 4 | Col. 5 |
| | 20/20 | 40/20 | 20/40 | 40/40 | 30/30 |
| Modulus $M_{300}$ ASTM D412-75 psi | 1340 | 2075 | 2050 | 2930 | 2140 |
| Set ASTM D412-75 Percent | 3.4 | 7.6 | 5.5 | 9.0 | 5.6 |
| Tensile strength ASTM D412-75 psi | 3960 | 3735 | 3490 | 3430 | 3770 |
| Elongation ASTM D412-75 Percent | 650 | 540 | 545 | 375 | 535 |
| Tear Strength Die C ASTM D624-73 pounds/inch | 255 | 260 | 245 | 230 | 245 |

Referring to Table 7 60 phr of N234 yields a tensile strength of 3805 psi in the nitrile rubber of this example. N550 at 60 phr yields a tensile strength of 3245 psi, which is significantly lower than that yielded by N234. Similarly, N550 yields a permanent set of 5.4% while N234 yields 9.6%. It is unusual that both carbon blacks at 60 phr yield the same tensile modulus, within an accepted range of experimental error, ie., 2180 and 2220 psi.

Referring to Table 9 column 5, a blend of 30 phr N550 and 30 phr N234 in the nitrile compound yields a tensile of 3770 psi, a result within accepted experimental error of that yielded by 60 phr N234, ie., 3805 psi. As previously discussed, such a result is totally unexpected since tensile failure ought to follow the pattern of the largest particle.

Comparing the permanent set value in column 5, ie. 5.6% to those yielded by N550 and N234 respectively, 5.4% and 9.6%, another unanticipated result is observed. Permanent set is the obverse of resilience, that is the lower the set, the more resilient the compound. In theory, large particle blacks do not entangle polymer molecules to the extent that small particle carbon blacks will entangle the polymer molecules. Therefore, large particle carbon blacks produce low set, or more resilient, compounds. At best a blend might produce an average set, in this case 7.5%, the arithmetic average of 5.4% and 9.6%. Instead a set of 5.6% is achieved; a truly unexpected result.

Comparing the tensile modulus values in columns 2, 3 and 5 of Table 9 with those in columns 2, 3 and 5 of Table 8 it is observed that the N234/N550 pair yields a higher tensile modulus than the N231/N774 pair, ie., approximately 2050 psi versus 1770 psi, a significant difference. This result is expected since both N234 and N550 are high structure carbon blacks. What is unexpected is that N234/N550 yields permanent set values lower than or equivalent to N231, and N774 pairs. Referring to Table 7 shows immediately that the high structure carbon blacks produce higher sets than the low structure blacks of the same particle size. This result allows high tensile modulus stacks with low set, or high resilience to be produced.

Again it is to be noted that the balance of properties shown in Table 9 are within normal and desirable ranges for rubber compounding.

The carbon black pairs of this invention can also be used with nonpolar rubbers such as natural rubber and styrene-butadiene rubber (SBR). The nonpolar rubbers are cured with sulfur cure systems typically utilized by those skilled in the art. Table 10 is an example of a nonpolar rubber, in this instance SBR, prepared with a pair of carbon blacks of this invention. The rubber stock was cured for 30 minutes. The carbon black pair N234/N550 had high structure with the mixture of sizes. Various ratios of the carbon blacks were used with SBR as shown columns 1 through 5 in Table 10.

## TABLE 10

| CARBON BLACK PAIRS – SBR RUBBER<br>N234  Small Particle High Structure<br>N550  Large Particle High Structure | | | | | |
|---|---|---|---|---|---|
| | N234/N550 parts per hundred | | | | |
| Property | Col. 1 | Col. 2 | Col. 3 | Col. 4 | Col. 5 |
| | 20/20 | 40/20 | 20/40 | 40/40 | 30/30 |
| Modulus $M_{300}$ ASTM D412-75 psi | 815 | 1400 | 1360 | 1590 | 1320 |
| Set ASTM D412-75 Percent | 6.4 | 9.6 | 8.1 | 13.9 | 8.3 |
| Tensile strength ASTM D412-75 psi | 2585 | 2640 | 2565 | 2430 | 2660 |
| Elongation ASTM D412-75 Percent | 720 | 545 | 590 | 430 | 595 |
| Tear Strength Die C ASTM D624-73 pounds/inch | 300 | 310 | 325 | 260 | 300 |

SBR is typically loaded with carbon black to attain mechanical properties present in nonpolar natural rubber. Those skilled in the art recognized that 60 phr carbon black is a typical carbon black loading for SBR. Columns 2, 3 and 5 of Table 10 present data for SBR loaded with 60 phr of the carbon black pair at various ratios one to another. Comparisons of the data show that at 60 phr loading of carbon black, the tensile strength of the rubber are essentially independent of the ratio of the carbon blacks. These results allow the compounds to use high amounts of less costly N550 carbon black. This illustrates one feature of the invention which is cost efficiency in rubber production.

The invention is exemplified by the formulations presented herein. It is not intended to restrict the claims, practice or the scope of this inventions to the examples or formulations specifically set forth. Those skilled in the art may practice and understand the invention according to the disclosure and are not limited by the specific discussion or examples provided.

Columns 2,3 and 5 of Table 6 present data for stocks loaded with 60 phr of a mismatched pair of carbon blacks at various ratios one to the other. Comparisons of the data show that at 60 phr loading the tensile properties of (measured by ASTM D412) the stock are independent of the ratio of the carbon blacks. This phenomenon allows the compounder to use higher amounts of less costly N550 black. This is a further demonstration of the utility of this invention.

The following Table 7 is a summary of characteristics for nitrile rubber stock with two carbon pairs exemplary of another embodiment of the invention. One of the pairs of the furnace carbon blacks is N231, which is a small particle black (Iodine Absorption No. 121) with low structure (DBP No. 92) and the other is N774, which is a large particle black (Iodine Absorption No. 29) with low structure (DBP No. 72). Another pair is a N234 which is a small particle black (Iodine Absorption No. 120) with high structure (DBP No. 125) and N550 which is a large particle black (Iodine Absorption No. 43) with high structure (DBP No. 121).

Table 7 summarizes data for modulus, set, tensile strength, elongation and tear strength for the carbon black pairs of this invention used with the fumed silica and silane coupler. The fumed silica was used in 15 parts per hundred weight of the selected rubber stock and the coupler was used in 1.5 parts per weight. Nitrile rubber stock was prepared with the mismatched pairs in varying ratios with the amount of each pair from 20 to 30 to 40 parts per hundred. Table 7 summarizes the properties of the nitrile rubber to illustrate the range of values for the rubber with the carbon black pairs of the invention.

A comparison of the carbon black pairs with different sizes to two sets of pairs matched for size as well as comparisons to individual carbon blacks used alone are shown in Table 7. The matched pairs of carbon black are similar in size but different in structure. For instance, N550 is a large particle black (Iodine Absorption No. 43) with high structure (DBP No. 121) and N774 is a large particle black (Iodine Absorption No. 29) with low structure (DBP No. 72). Another matched pair is N231 which is a small particle black (Iodine Absorption No. 121) with low structure (DBP No. 92) and N234 which is a small particle black (Iodine Absorption No. 120) with high structure (DBP No. 125). The matched carbon black pairs were used with the fumed silica or silane coupler. The matched carbon black pairs were prepared in varying ratios from 20 to 30 to 40 parts per hundred similar to the pairs with different size. Individual carbon blacks were also used at 60 parts per hundred of nitrile rubber with the fumed silica and silane coupler of the carbon black system of the present invention.

The rubber stocks in Table 7 were cured for thirty minutes with a sulfur cure.

## Claims

1. A carbon black system for rubber manufacture characterized by comprising

   a pair of carbon blacks one of said pair of carbon blacks having a large particle size and the other of said pair having a small particle size;

   a fumed silica; and

   a silane coupler.

2. A carbon black system of claim 1 characterized in that both of said pair of carbon blacks have the same structure with one of said pair of the carbon blacks being of a large particle size having an Iodine Absorption No. of less than 115 and the other of said pair having a small particle size with an Iodine Absorption No. of greater than 115.

3. The carbon black system of claim 1 characterized in that one of said pair of carbon blacks has a low structure with a DBP No. of less than 110 with the other of said pair having a high structure with a DBP No. of greater than 110;

   one of said pair of carbon blacks having a large particle size with an Iodine Absorption No. of less than 110 and the other of said pair having a small particle size with an Iodine Absorption No. of greater than 110.

4. The carbon black system of any of the preceding claims characterized in that the ratio of either one of said carbon blacks to the other in the mixture does not exceed 3:1.

5. The carbon black system of any of the preceding claims characterized in that the fumed silica is 12.5% to 50% by weight of the combined weight of the carbon black pair.

6. A rubber composition characterized by comprising

   a rubber selected from the group of polar and nonpolar rubbers;

   a carbon black system comprising a mixture of a pair of furnace carbon blacks;

   one of said pair of carbon blacks having a large particle size and the other of said pair having a small particle size;

   a fumed silica; and

   a silane coupler.

7. The rubber composition of claim 6 characterized in that both of said pair of carbon blacks have the same structure with one of said pair being of large particle size with an Iodine Absorption No. of less than 115 and the other of said pair having a small particle size with an Iodine Absorption No. of greater than 115.

8. The rubber composition of claim 6 characterized in that
one of said pair of carbon blacks has a low structure with a DBP No. of less than 110 with the other of said pair having a high structure with a DBP No. of greater than 110;
one of said pair of carbon blacks having a large particle size with an Iodine Absorption No. of less than 110 and the other of said pair having a small particle size with an Iodine Absorption No. of greater than 110.

9. The rubber composition of any of claims 7 or 8 characterized in that the ratio of either one of said carbon blacks to the other in the mixture does not exceed 3:1.

10. The rubber composition of any of claims 7 or 8 characterized in that the carbon black system is from about 40 parts per hundred to about 80 parts per hundred of the rubber.

11. The rubber composition of any of claims 7 or 8 characterized in that said fumed silica is from 10 parts per hundred to 20 parts per hundred of the rubber.

12. The rubber composition of any of claims 7 or 8 characterized in that said nonpolar rubber is selected from the group of styrene-butadiene rubber and natural rubber.

13. The rubber composition of any of claims 7 or 8 characterized in that said polar rubber is a sulfur cured nitrile rubber.

14. The rubber composition of claim 7 characterized in that the carbon black system comprises a mixture of N231 and N774 wherein the ratio of either one of said carbon blacks to the other does not exceed 3:1.

15. The rubber composition of claim 7 characterized in that the carbon black system comprises a mixture of N234 and N550 wherein the ratio of either one of said carbon blacks to the other does not exceed 3:1.

16. The rubber composition of claim 8 characterized in that the carbon black system comprises a mixture of N231 and N550 wherein the ratio of either one of said carbon blacks to the other does not exceed 3:1.

17. The rubber composition of claim 8 characterized in that the carbon black system comprises a mixture of N234 and N774 wherein the ratio of either one of said carbon blacks to the other does not exceed 3:1.

18. The rubber composition of claim 8 characterized in that the carbon black system comprises a mixture of N110 and N660 wherein the ratio of either one of said carbon blacks to the other does not exceed 3:1.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 575 522 (WILLIAM D. BREACH)<br>* column 5; table 2 *<br>* example 1 *<br>* claims 1,6,14 *<br>--- | 1,6 | C08K13/02<br>C08L21/00<br>//(C08K13/02,<br>3:04,3:04,<br>3:36,5:54) |
| A | US-A-4 519 430 (SHAMIM AHMAD)<br>* examples 2-3 *<br>* claims 1,2 *<br>--- | 1,6 | |
| A | DATABASE WPI<br>Derwent Publications Ltd., London, GB;<br>AN 91-055763<br>& JP-A-3 007 602 (TOYO RUBBER IND KK) 14 January 1991<br>* abstract *<br>----- | 1,6 | |
| | | | TECHNICAL FIELDS SEARCHED (Int.Cl.5)<br><br>C08K<br>C08L |

The present search report has been drawn up for all claims

| Place of search | Date of completion of the search | Examiner |
|---|---|---|
| THE HAGUE | 4 February 1994 | Siemens, T |

EPO FORM 1503 03.82 (P04C01)